# EUROPÄISCHE PATENTSCHRIFT

(11) **EP 0 594 174 B1**
(45) Veröffentlichungstag und Bekanntmachung des Hinweises auf die Patenterteilung: **02.01.1997**
(21) Anmeldenummer: 93117088.0
(22) Anmeldetag: 21.10.1993
(51) Int. Cl.: C08J 9/224, C08J 9/232

(54) **Verfahren zur Behandlung von Polyolefin-Partikelschäumen**
Process for treating polyolefin foam particles
Procédé de traitement de particules de mousse de polyoléfine

(30) Priorität: 22.10.1992 DE 4235693
(43) Veröffentlichungstag der Anmeldung: 27.04.1994
(73) Patentinhaber: HEIN-FARBEN GmbH, D-90556 Cadolzburg (DE)
(72) Erfinder: Grab, Gerhard, D-67117 Limburgerhof (DE); Jacob, Dieter, D-90556 Cadolzburg (DE)
(74) Vertreter: Spott, Gottfried, Dr.

(56) Entgegenhaltungen:
- EP-A- 0 002 539
- GB-A- 1 090 121
- CHEMICAL ABSTRACTS, vol. 84, no. 16, 19. April 1976, Columbus, Ohio, US; abstract no. 106712h, YAMAGUCHI YUTAKA & TAGAKI KIYOSHI : 'Fire resistant polyolefin foams.'

## Beschreibung

Die vorliegende Erfindung betrifft ein Verfahren zum antistatisch Ausrüsten und/oder flammfest Ausrüsten und/oder Anfärben von Polyolefin-Partikelschäumen.

Aus expandierten Polyolefinen hergestellte Formteile können aufgrund der Eigenschaften der Polyolefine vielseitig verwendet werden. Polyolefinformteile, die aus Homopolymeren oder Copolymeren von Polyolefinen, wie Polyethylen oder Polypropylen, bestehen, können aus Partikelschaum hergestellt werden. Der Partikelschaum wird in der Regel mit Wasserdampf erhitzt, wobei er unter Verfritten der Oberflächen der Partikel zu einem Formkörper sintert. Um die Anwendungsmöglichkeiten für derartige Materialien noch zu erweitern, ist es notwendig, bestimmte Eigenschaften zu verändern. So ist es in manchen Einsatzbereichen notwendig, die Formkörper flammfest auszurüsten. Bei einem Einsatz in Verbindung mit elektronischen Geräten kann es notwendig sein, eine elektrostatische Aufladung der Oberfläche zu verhindern, und in manchen Anwendungsbereichen ist es erwünscht, das Material anzufärben, um schon durch die Farbe die Art der Verwendung zu signalisieren.

Der Polyolefin-Partikelschaum, der zu einem Formteil verarbeitet werden soll, was gewöhnlich unter Erhitzen und Anwendung von Druck erfolgt, kann zwar bereits über die zu seiner Herstellung verwendete Grundmischung in der gewünschten Weise ausgerüstet werden. Dies ist jedoch häufig nicht sinnvoll, da die Weiterverarbeitung der Polyolefinpartikel meist nicht am Ort ihrer Herstellung erfolgt. Eine spätere Ausrüstung solcher Partikel kann nur noch erfolgen, indem das Behandlungsmittel auf die Oberfläche aufgebracht wird. Die Behandlung muß dabei einerseits so erfolgen, daß das Verfritten der Partikel beim Sintervorgang nicht behindert wird. Andererseits darf die auf die Partikeloberflächen aufgebrachte Schicht nicht verspröden, so daß sie während der weiteren Verarbeitungsschritte abplatzt, was zu einer ungleichmäßigen Verteilung der Ausrüstung führen würde.

Es war daher Aufgabe der Erfindung, ein Verfahren bereitzustellen, mit dem Polyolefin-Partikelschäume flammfest ausgerüstet, antistatisch behandelt und/oder gefärbt werden können.

Diese Aufgabe wird gelöst durch ein Verfahren zum antistatisch Ausrüsten und/oder flammfest Ausrüsten und/oder Anfärben von Polyolefin-Partikelschäumen, das dadurch gekennzeichnet ist, daß man Polyolefinpartikel mit einer organischen Flüssigkeit benetzt, eine pulverförmige Zusammensetzung, die ein Flammschutzmittel und/oder ein antistatisches Mittel und/oder einen Farbstoff sowie einen Filmbildner enthält, unter Mischen zugibt und die erhaltene Mischung in an sich bekannter Weise sintert.

Überraschenderweise gelingt es mit dem erfindungsgemäßen Verfahren, die Polyolefinpartikel mit einer Schicht zu überziehen, die das oder die gewünschten Mittel enthält, so daß das Polyolefin damit in der gewünschten Weise ausgerüstet wird. Diese Schicht behindert nicht das Zusammensintern der Partikel, so daß trotz Ausrüstung Formkörper mit den gewünschten mechanischen und physikalischen Eigenschaften erhalten werden können.

Das erfindungsgemäße Verfahren dient zur Ausrüstung von Polyolefin-Partikelschäumen. Es kann eingesetzt werden für Homopolymere und Copolymere von Polyolefinen, wie Polyethylen, Polypropylen, Polybutylen, oder Mischpolymerisate hiervon. Besonders geeignet ist das erfindungsgemäße Verfahren für Polyethylen, Polypropylen und Mischpolymerisate davon. Das Polyolefin wird in Form eines Partikelschaums eingesetzt.

In der ersten Stufe des erfindungsgemäßen Verfahrens werden die Polyolefinpartikel mit einer organischen Flüssigkeit benetzt. Als organische Flüssigkeit wird dabei eine Flüssigkeit gewählt, die bei Raumtemperatur gegenüber dem Polyolefin weitgehend inert ist, so daß die Polyolefinpartikel nicht angegriffen, gelöst oder in unerwünschter Weise auf ihrer Oberfläche verändert werden. Geeignet als organische Flüssigkeiten sind schwer flüchtige, leichtviskose bis mittelviskose Flüssigkeiten, die bevorzugt bei den Temperaturen des Sinterns der Polyolefinpartikel ganz oder weitgehend resorbiert werden. Durch die Resorption der organischen Flüssigkeit erhält man Formkörper, deren Oberfläche nicht schmierend ist. Geeignet sind beispielsweise pflanzliche oder tierische Öle, langkettige Ester oder Ether, aromatische Ester und Mineralöle, wie Paraffinöl. Wenn der Partikelschaum flammfest ausgerüstet werden soll, wird in einer bevorzugten Ausführungsform ein Teil des zur Flammschutzausrüstung verwendeten Mittels, nämlich ein flüssiges Flammschutzmittel, als Benetzungsflüssigkeit verwendet. Beispiele hierfür sind bromierte aromatische Kohlenwasserstoffverbindungen. Besonders geeignet sind bromierte Phthalsäureester, wie Tetrabromphthalsäureester, von niedermolekularen Alkoholen. Gegebenenfalls kann das flüssige Flammschutzmittel in Mischung mit einer inerten organischen Flüssigkeit eingesetzt werden. Die organische Flüssigkeit wird in an sich bekannter Weise auf die Partikel aufgezogen, indem man diese Flüssigkeit beispielsweise unter Mischen der Partikel in einem Zwangsmischer aufsprüht.

Die organische Flüssigkeit wird in einer solchen Menge eingesetzt, daß auf der Oberfläche der Partikel nach dem Sintern nichts mehr zurückbleibt. Geeigneterweise liegt die verwendete Menge an organischer Flüssigkeit im Bereich von 4 bis 10 Gewichtsprozent, bezogen auf die Gesamtmischung aus Polyolefin, organischer Flüssigkeit und pulverförmiger Zusammensetzung.

Nachdem die Polyolefinpartikel mit der organischen Flüssigkeit überzogen worden sind, werden sie mit einer pulverförmigen Zusammensetzung vermischt. Diese pulverförmige Zusammensetzung enthält einen Filmbildner, ein Flammschutzmittel und/oder ein antistatisches Mittel und/oder einen Farbstoff sowie gegebenenfalls weitere Additive, die gewünschte Eigenschaften vermitteln. Als Filmbildner wird eine Substanz verwendet, die bei Raumtemperatur fest ist und zu einem Pulver vermahlen werden kann, die bei den zum Sintern der Polyolefinpartikel verwendeten Temperaturen schmilzt und/oder in der organischen Flüssigkeit gelöst wird und die einen kontinuierlichen Film bilden kann. Außerdem darf der Filmbildner nach dem Aufbringen auf die Oberfläche nicht verspröden und auch die Polyolefinpartikel nicht negativ beeinflussen. Geeignet sind natürliche und synthetische Substanzen. Es können beispielsweise natürliche und synthetische Wachse, wie Stearin oder Polyethylenwachs, eingesetzt werden, die bei Temperaturen im Bereich von 80 bis 110° schmelzen und dadurch einen Film bilden und gleichzeitig zugegebene Additive binden können. Als synthetische Substanzen sind insbesondere Polymerharze geeignet, wie Harze auf Basis von Cyclohexanon. Diese Harze können teilweise durch das organische flüssige Mittel gelöst werden, was das Schmelzen in dem beim Sintern angewendeten Temperaturbereich noch fördert, und dann einen Film bilden. Der Filmbildner wird in einer solchen Menge eingesetzt, daß auf den Partikeln ein kontinuierlicher Film gebildet werden kann. Dazu sind, bezogen auf die Gesamtmischung, etwa 0,2 bis 2 Gewichtsprozent geeignet.

Der pulverförmige Filmbildner wird zusammen mit dem Flammschutzmittel und/oder dem antistatischen Mittel und/oder dem Farbstoff sowie gegebenenfalls weiteren Additiven den mit der organischen Flüssigkeit überzogenen Partikel zugemischt.

Das pulverförmige Flammschutzmittel ist entweder das einzige verwendete Flammschutzmittel oder wird in Kombination mit einem flüssigen Flammschutzmittel verwendet. Bevorzugt ist eine Kombination aus einem flüssigen und einem festen Flammschutzmittel, die besonders wirkungsvoll ist. Als festes Flammschutzmittel können die auf diesem Gebiet bekannten Mittel verwendet werden. Um die Flammschutzwirkung noch weiter zu verstärken, kann in einer bevorzugten Ausführungsform zusätzlich ein mit dem Flammschutzmittel eine synergistische Wirkung erzeugendes Mittel eingesetzt werden. Bevorzugt wird als Synergist Antimontrioxid verwendet. Der gesamte Anteil des Flammschutzmittels liegt, bezogen auf die Gesamtmischung, im Bereich von 4 bis 10 Gewichtsprozent, bevorzugt 5 bis 7 Gewichtsprozent. Falls sowohl ein flüssiges als auch ein festes Flammschutzmittel verwendet werden, dann liegt das Verhältnis von flüssigem zu festem Mittel je nach den eingesetzten Mitteln bei etwa 6 bis 2:1, bevorzugt etwa 3 bis 5:1.

Als weitere Additive, die die Eigenschaften des Polyolefins verändern, können antistatische Mittel verwendet werden. Für viele Anwendungszwecke ist es unerwünscht, wenn sich die Polymeroberfläche statisch auflädt. Die statische Aufladung führt insbesondere bei elektronischen Geräten zu Problemen. Wenn das Polyolefin daher in diesen Gebieten angewendet wird, dann wird es vorzugsweise antistatisch behandelt. Antistatisch wirkende Mittel sind an sich bekannt, und es können die hierfür üblichen Mittel in den für diesen Zweck üblichen Mengen verwendet werden. In der Regel handelt es sich dabei um hydrophile Stoffe, wie Polyethylenglykolester und Aminderivate, beispielsweise Tetraalkylammoniumethylsulfat.

Weiterhin kann das Polyolefin mit den erfindungsgemäßen Verfahren angefärbt werden. Dazu wird ein Farbstoff zugegeben. Der Farbstoff hat dabei mehrere Funktionen. Zum einen dient er als Indikator für die Verteilung des pulverförmigen Mittels auf den Partikeln. An der Gleichmäßigkeit der Einfärbung läßt sich die gleichförmige Verteilung ablesen. Weiterhin kann der Farbstoff dazu verwendet werden, auf die Art des Formkörpers hinzuweisen. So kann bestimmten Additiven eine bestimmte Farbe zugeordnet werden. Weiterhin kann er natürlich aus ästhetischen Gründen verwendet werden. Als Additiv für das erfindungsgemäße Verfahren sind die auf diesem Gebiet bekannten Pigmentfarbstoffe geeignet. Es können sowohl organische als auch anorganische Pigmentfarbstoffe verwendet werden, die zum Beispiel von den Firmen BASF unter dem Namen Pigmosol oder von der Firma Bayer Bayferrox geliefert werden. Die aufzubringende Menge liegt im Bereich von 0,01 bis 5 Gewichtsprozent bezogen auf den vorgelegten Partikelschaum. Falls der Partikelschaum nur angefärbt wird, werden Farbstoffmengen des unteren Bereiches verwendet, während dann, wenn gleichzeitig eine Flammfestausrüstung und/oder antistatische Ausrüstung erfolgt, der Farbstoffanteil im oberen Bereich liegen sollte.

Erfindungsgemäß kann das Polyolefin entweder nur flammfest oder antistatisch ausgerüstet oder angefärbt werden oder gleichzeitig mit zwei oder drei dieser Eigenschaften versehen werden.

Die pulverförmige Zusammensetzung wird dem mit der organischen Flüssigkeit überzogenen Partikelschaum zugemischt, wobei die pulverförmigen Komponenten von der organischen Flüssigkeit aufgenommen und gebunden werden. Auf diese Weise entsteht ein rieselfähiger Partikelschaum. Dieser Partikelschaum wird in an sich bekannter Weise weiterverarbeitet, so daß die unvollständig oder vollständig expandierten Partikel entweder unter weiterer Expansion oder ohne weitere Expansion gesintert werden. Als Sintern der Polyolefinpartikel wird hier ein Verfahrensschritt bezeichnet, bei dem die Polyolefinpartikel soweit erhitzt werden, daß ihre Oberflächen zu schmelzen beginnen und dann beim Abkühlen verfritten, wodurch die Partikel zu einem Formkörper verbunden werden. Üblicherweise wird das Sintern der Partikel erreicht, indem dem Partikelschaum Wasserdampf mit einer Temperatur im Bereich von 110 bis 160° C zugeführt wird. Bei dieser Temperatur können die Partikel gegebenenfalls noch weiter expandieren. Gleichzeitig bildet sich bei der Sintertemperatur aus der organischen Flüssigkeit und der pulverförmigen Zusammensetzung ein gleichmäßiger Film, der bei Verwendung eines Harzes eine lackartige Schicht sein kann, der die Partikel überzieht und das Flammschutzmittel und/oder das antistatische Mittel und/oder den Farbstoff sowie gegebenenfalls weitere Additive fest bindet, ohne die physikalischen und mechanischen Eigenschaften des entstehenden Formkörpers nennenswert zu beeinträchtigen.

Durch das Erhitzen wird gleichzeitig ein Teil der organischen Flüssigkeit in die Partikel absorbiert, so daß nach der Beendigung des Sintervorganges an der Oberfläche keine ungebundene organische Flüssigkeit mehr vorhanden ist.

Erfindungsgemäß wird ein Verfahren zur Verfügung gestellt, mit dem Polyolefinpartikel, bevorzugt in Form eines Partikelschaums, in einfacher Weise flammfest und/oder antistatisch ausgerüstet und/oder angefärbt werden können. Die erfindungsgemäß behandelten Polyolefinpartikel ergeben Formkörper mit ausgezeichneten Eigenschaften.

Die Erfindung wird durch die folgenden Beispiele weiter erläutert.

### Beispiel 1:

Man gibt 100 Teile (Gewichtsteile) eines Polyethylen-Partikelschaums (Dichte 0,038 g pro ml) in einen Zwangsmischer und verteilt auf den Partikeloberflächen gleichmäßig unter intensivem Mischen 7,5 Teile Paraffinöl. Hierauf wird die klebrige Masse mit 12 Teilen einer Mischung aus 70 Teilen Dibrompropyldion, 20 Teilen Antimontrioxid, 10 Teilen eines Cyclohexanonharzes (im Handel erhältlich unter dem Namen Laropal® K 80) und 1 Teil Farbstoff abgepudert. Die erhaltenen gut rieselfähigen Partikel können sofort oder nach längerer Lagerung weiterverarbeitet werden. Es werden Formteile erhalten, die die Anforderungen des Flammfestigkeit-Standards UL 94 HF-1 (Underwriters Laboratories Safety Standard 94, Section 2 and 3) erfüllen.

### Beispiel 2

Man gibt 100 Teile eines Polypropylen-Partikelschaums (Dichte 0,033 g pro ml) in einen Zwangsmischer und verteilt auf den partikeloberflächen gleichmäßig unter intensivem Mischen 7,5 Teile eines Gemisches aus Paraffinöl und Tetrabromphtalsäureester. Hierauf wird die klebrige Masse mit 6 Teilen einer Mischung aus 70 Teilen des Flammschutzmittels TBX/TBD (halogenhaltiges oligomeres Produkt auf Basis aromatischer Bromverbindungen mit hervorragender flammhemmender Wirkung, etwa 59% Bromgehalt und etwa 3% Chlorgehalt), 20 Teilen Antimontrioxid, 10 Teilen eines Cyclohexanonharzes (im Handel erhältlich unter dem Namen Laropal® K 80) und 1 Teil Farbstoff abgepudert. Die erhaltenen gut rieselfähigen Partikel können sofort oder nach längerer Lagerung weiterverarbeitet werden. Es werden Formteile erhalten, die die Anforderungen des Flammfestigkeits-Standards UL 94 HF-1 erfüllen.

### Beispiel 3

Man gibt 100 Teile eines Polypropylen-Partikelschaums (Dichte 0,037 g pro ml) in einen Zwangsmischer und verteilt auf den Partikeloberflächen gleichmäßig unter intensivem Mischen 4,5 Teile Tetrabromphtalsäureester. Danach wird die klebrige Masse mit 8 Teilen einer Masse aus 70 Teilen des Flammschutzmittels TBX/TBD, 20 Teilen Antimontrioxid, 10 Teilen Filmbildner auf Basis von Cyclohexanon (Laropal® K 80) und 1 Teil Farbstoff abgepudert. Die erhaltenen gut rieselfähigen Partikel können sofort oder nach längerer lagerung weiterverarbeitet werden. Es werden Formteile erhalten, die die Anforderung des Flammfestigkeits-Standards UL 94 HF-1 erfüllen.

### Beispiel 4

Man gibt 100 Teile eines Polypropylen-Partikelschaums (Dichte 0,037 g pro ml) in einen Zwangsmischer und verteilt auf den Partikeloberflächen gleichmäßig unter intensivem Mischen 4,5 Teile Tetrabromphtalsäureester. Danach wird die klebrige Masse mit 8 Teilen einer Mischung aus 70 Teilen des Flammschutzmittels TBX/TBD, 20 Teilen Antimontrioxid, 10 Teilen eines Wachs-Filmbildners und einem Teil Farbstoff abgepudert. Der Wachs-Filmbildner ist ein Pulver auf Basis von niedermolekularem Polyethylen (Viscosität 900 bis 1550 mm²/sec), der als LUVAX-A-Pulver von der Firma BASF vertrieben wird. Die erhaltenen gut rieselfähigen Partikel können sofort oder nach längerer Lagerung weiterverarbeitet werden. Es werden Formteile erhalten, die die Anforderung des Flammfestigkeitsstandards UL 94 HF-1 erfüllen.

### Beispiel 5:

Man gibt 100 Teile eines Polyethylen-Partikelschaums (Dichte 0,029 g pro ml) in einen Zwangsmischer und verteilt auf den Partikeloberflächen gleichmäßig unter intensivem Mischen 4,5 Teile Tetrabromphthalsäureester. Danach wird die klebrige Masse mit 8 Teilen einer Mischung aus 70 Teilen des Flammschutzmittels TBX-TBD, 20 Teilen Antimontrioxid und 10 Teilen Stearin abgepudert. Das Stearin ist in Pulverform mit einem Körnungsmaximum zwischen 250 und 500 µm. Die erhaltenen gut rieselfähigen Partikel können sofort oder nach längerer Lagerung weiterverarbeitet werden. Es werden Formteile erhalten, die die Anforderungen des Flammfestigkeits-Standards UL 94 HF-1 erfüllen.

### Beispiel 6:

Man gibt 100 Teile eines Polypropylen-Partikelschaums (Dichte 0,045 g pro ml) in einen Zwangsmischer und verteilt auf den Partikeloberflächen gleichmäßig unter intensivem Mischen 0,5 Teile Rapsöl. Danach wird die klebrige Masse mit einem Teil einer Mischung aus 60 Teilen eines anorganischen gelben Buntpigments und 30 Teilen Stearin abgepudert. Das Buntpigment ist ein Eisenoxidpulver, das unter dem Namen "Beyferrox" im Handel erhältlich ist. Die erhaltenen gut rieselfähigen Partikel können sofort oder nach längerer Lagerung zu gut gefärbten Formteilen weiterverarbeitet werden.

## Patentansprüche

1. Verfahren zum antistatisch Ausrüsten und/oder flammfest Ausrüsten und/oder Anfärben von Polyolefin-Partikelschäumen, dadurch gekennzeichnet, daß man Polyolefinpartikel mit einer organischen Flüssigkeit benetzt, eine pulverförmige Zusammensetzung, die ein Flammschutzmittel und/oder ein antistatisches Mittel und/oder einen Farbstoff sowie einen Filmbildner enthält, unter Mischen zugibt und die erhaltene Mischung in an sich bekannter Weise sintert.

2. Verfahren nach Anspruch 1, dadurch gekennzeichnet, daß man als Polyolefin-Partikelschaum einen Partikelschaum aus Polyethylen, Polypropylen oder Mischpolymerisaten hiervon verwendet.

3. Verfahren nach Anspruch 1 oder 2, dadurch gekennzeichnet, daß man als flüssiges Flammschutzmittel eine bromhaltige aromatische Verbindung verwendet.

4. Verfahren nach einem der vorhergehenden Ansprüche, dadurch gekennzeichnet, daß man zusätzlich zum Flammschutzmittel als synergistisch wirkendes Mittel Antimontrioxid verwendet.

5. Verfahren nach einem der vorhergehenden Ansprüche, dadurch gekennzeichnet, daß man den Filmbildner in einer Menge von 0,2 bis 2 Gewichtsprozent, bezogen auf die Gesamtzusammensetzung aus Polyolefinpartikeln, organischer Flüssigkeit und pulverförmiger Zusammensetzung, verwendet.

6. Verfahren nach einem der vorhergehenden Ansprüche, dadurch gekennzeichnet, daß man das Flammschutzmittel in einer Menge von 4 bis 10 Gewichtsprozent, bezogen auf die Gesamtzusammensetzung, verwendet, wobei gegebenenfalls das Verhältnis von flüssigem Flammschutzmittel zu pulverförmigem Flammschutzmittel im Bereich von 6 bis 2:1 liegt.

7. Verfahren nach einem der vorhergehenden Ansprüche, dadurch gekennzeichnet, daß die pulverförmige Zusammensetzung einen Farbstoff enthält.

8. Verfahren nach einem der vorhergehenden Ansprüche, dadurch gekennzeichnet, daß die pulverförmige Zusammensetzung ein Additiv zur Reduzierung des Oberflächenwiderstandes enthält.

9. Verfahren nach einem der vorhergehenden Ansprüche, dadurch gekennzeichnet, daß man die Mischung bei einer Temperatur im Bereich von 110°C bis 160°C sintert.

10. Verfahren nach einem der vorhergehenden Ansprüche, dadurch gekennzeichnet, daß man die Mischung bei einer Temperatur im Bereich von 120°C bis 150°C mit Wasserdampf sintert.

11. Verfahren nach einem der vorhergehenden Ansprüche, dadurch gekennzeichnet, daß man die organische Flüssigkeit in einer Menge von 4 bis 10 Gewichtsprozent, bezogen auf die Gesamtzusammensetzung, verwendet.

## Claims

1. A method of rendering antistatic and/or rendering flame-resistant and/or coloring polyolefin particle foams, characterised in that polyolefin particles are wetted with an organic liquid, a powder composition which contains a flame-proofing agent, and/or an antistatic agent, and/or a coloring agent as well as a film-forming agent is added with mixing and the resulting mixture is sintered in per se known manner.

2. A method as set forth in claim 1 characterised in that the polyolefin particle foam used is a particle foam of polyethylene, polypropylene or mixed polymers thereof.

3. A method as set forth in claim 1 or claim 2 characterised in that a bromine-containing aromatic compound is used as the liquid flame-proofing agent.

4. A method as set forth in one of the preceding claims characterised in that in addition to the flame-proofing agent antimony trioxide is used as an agent with a synergistic effect.

5. A method as set forth in one of the preceding claims characterised in that the film-forming agent is used in an amount of between 0.2 and 2 percent by weight with respect to the total composition of polyolefin particles, organic liquid and powder composition.

6. A method as set forth in one of the preceding claims characterised in that the flame-proofing agent is used in an amount of between 4 and 10 percent by weight, with respect to the total composition, wherein optionally the ratio of liquid flame-proofing agent to powder flame-proofing agent is in the range of between 6 and 2:1.

7. A method as set forth in one of the preceding claims characterised in that the power composition contains a coloring agent.

8. A method as set forth in one of the preceding claims characterised in that the powder composition contains an additive for reducing the surface resistance.

9. A method as set forth in one of the preceding claims characterised in that the mixture is sintered at a temperature in the range of between 110°C and 160°C.

10. A method as set forth in one of the preceding claims characterised in that the mixture is sintered at a temperature in the range of between 120°C and 150°C with water vapor.

11. A method as set forth in one of the preceding claims characterised in that the organic liquid is used in an amount of between 4 and 10 percent by weight with respect to the total composition.

## Revendications

1. Procédé de traitement antistatique et/ou de traitement ignifuge et/ou de coloration de particules de mousse de polyoléfine, caractérisé en ce qu'on mouille des particules de polyoléfine avec un liquide organique, on ajoute une composition en poudre qui contient un agent ignifugeant et/ou un agent antistatique et/ou un colorant ainsi qu'un agent filmogène, en mélangeant et le mélange obtenu est fritté de manière connue.

2. Procédé selon la revendication 1, caractérisé en ce qu'on utilise comme mousse en particules de polyolefine, une mousse en particules de polyéthylène, polypropylène ou copolymères de ceux-ci.

3. Procédé selon la revendication 1 ou 2, caractérisé en ce qu'on utilise comme agent ignifugeant liquide, un composé aromatique contenant du brome.

4. Procédé selon l'une des revendications précédentes, caractérisé en ce qu'on utilise en plus de l'agent ignifugeant comme agent ayant un effet synergique du trioxyde d'antimoine.

5. Procédé selon l'une des revendications précédentes, caractérisé en ce que l'on utilise comme agent filmogène en une quantité de 0,2 à 2 % en poids, par rapport à la composition globale de particules en polyoléfine, un liquide organique et une composition en poudre.

6. Procédé selon l'une des revendications précédentes, caractérisé en ce qu'on utilise l'agent ignifugeant en une quantité de 4 à 10 % en poids, par rapport à la composition globale, où le cas échéant le rapport de l'agent ignifugeant liquide à l'agent ignifugeant en poudre est dans l'intervalle de 6 à 2 : 1.

7. Procédé selon l'une des revendications précédentes, caractérisé en ce que la composition en poudre contient un colorant.

8. Procédé selon l'une des revendications précédentes, caractérisé en ce que la composition en poudre contient un additif pour réduire la résistance de surface.

9. Procédé selon l'une des revendications précédentes, caractérisé en ce qu'on fritte le mélange à une température dans l'intervalle de 110°C à 160°C.

10. Procédé selon l'une des revendications précédentes, caractérisé en ce qu'on fritte le mélange à une température comprise entre 120°C et 150°C avec de la vapeur d'eau.

11. Procédé selon l'une des revendications précédentes, caractérisé en ce qu'on utilise le liquide organique en une quantité de 4 à 10 % en poids, par rapport à la composition totale.
